# EUROPEAN PATENT APPLICATION

(11) **EP 2 124 166 A1**
(43) Date of publication of application: **25.11.2009**
(21) Application number: 08156594.7
(22) Date of filing: 20.05.2008
(51) Int. Cl.: G06F 21/24

(54) **Data pseudonymisation.**

(71) Applicant: Sapior Limited, London E18 2HQ (GB)
(72) Inventor: Navarro, Robert, London E18 2HQ (GB); Gilbert, Steve, London E18 2HQ (GB)
(74) Representative: ip21 Ltd

(57) **Abstract**

A method of securely storing and retrieving data in a database comprises the steps of consistently substituting the value of at least a first field in a first data set with a corresponding arbitrary data label and storing the first data set, including the substituted data label, in a database. Data is extracted from the database by encrypting the substituted data label in the extracted data using a user-specific key, and communicating the extracted data, including the encrypted substituted data label, to a user associated with the user-specific key. In this way each user receives their own set of substituted data labels, which excludes the possibility of collusion between users.

## Description

### Field of the Invention

This invention relates to a method of processing data in a database and, in particular, to a method of pseudonymisation for data in a database.

### Background to the Invention

In many areas of commerce and public service, large amounts of personal information are stored in databases. Maintaining the security of such databases is of vital importance in terms of maintaining customer or public confidence in the database operator. However, it is often desirable to grant access to a range of users of the database in order that such users can perform statistical analysis of the database content. An example might be a medical patient database. Access to such a database may be granted to selected pharmaceutical companies in order that statistical analysis may be carried out, for example as part of research into a given medical disorder.

In order for statistical analysis to be meaningful, each patient or individual in the database must be uniquely identified. However, where data is released to third parties, it is important for reasons of patient confidentiality that the true identity of the patient is not available. A simple solution is to produce a version of the data that is released to the third party in which the personal data is replaced with uniquely associated labels from which the personal data cannot be identified. For example, names may be replaced by a randomly generated string of characters. Provided the same respective character string is used consistently to replace each name, meaningful statistical analysis of the data may be carried out without revealing any personal information. This process of replacing personal data with arbitrary labels is known as pseudonymisation.

Where data is released to third parties from a confidential database, it can often be the case that different ranges of data may be provided to different third parties. If each of these third parties is provided with the same set of pseudonymised labels, it would be possible for the third parties to collude to associate the data sets they have each received and to reconstruct a larger part of the database than that to which they are entitled. It is therefore known to generate multiple sets of independent pseudonymised labels, with a set for each potential user of the data, so that there is no deterministic relationship between the labels of one set and the labels of another set. In this way, it is not possible to automatically correlate the data from two sets in order to reconstruct a larger part of the database than is in either of the two sets of data.

Thus, in a known solution, a master database is provided which contains multiple sets of pseudonymised data labels, with a respective data label for each of multiple users of the data. However, such a database represents a potential risk to the security of the data in that it provides a single source for all of the pseudonymised data labels for all users and does not scale to thousands of users.

The present invention, at least in its preferred embodiments, seeks to address these problems.

### Summary of the Invention

According to the present invention, there is provided a method of securely storing and retrieving data. The method of securely storing and retrieving data, the method comprising:
consistently substituting the values of at least a first field in a first data set with corresponding arbitrary substituted data labels to generate a second data set;
encrypting the substituted data labels in the second data set using a user-specific key to generate a third data set in which the substituted data labels are replaced by encrypted user data labels; and
communicating the third data set to a user associated with the user-specific key.

Thus, according to the present invention, the data labels for each user can be generated from the root substituted data labels "on the fly" using an encryption key specific to that user. This has the significant advantage that there is no single source for all of the user data labels. Indeed, it is unnecessary to store the user data labels, as they can always be generated from the root data labels and the user's key and thus this solution is scalable to thousands of users.

The second data set may be stored in a database. The method may comprise the step of extracting the second data set from the database prior to the step of encrypting the substituted data labels. The extraction of the second data set from the database may be in response to a request for a third data set. The second data set may represent a subset of the data in the first data set. Similarly, the third data set may represent a subset of the data in the second data set.

Typically, the value of the first field in the first data set is an encrypted value. In this way, a look-up table of first field values against the corresponding substituted data labels does not contain any plain text data. The substituted data labels may be randomly generated and stored in a look-up table of values of the first field against the corresponding substituted data labels.

The relationship between the substituted data labels and the user data labels is, desirably, non-deterministic, so that knowledge of one set of user data labels does not allow the values of a further set of user data labels to be calculated.

The invention extends to data processing apparatus configured to operate in accordance with the method of the invention. The invention further extends to computer software which configures general-purpase data processing apparatus to operate according to the method of the invention.

### Brief Description of the Drawings

Embodiments of the invention will now be described by way of example only and with reference to the accompanying drawings, in which:
Figure 1 represents a data processing method according to the prior art; and
Figure 2 represents a data processing method according to an embodiment of the invention.

### Detailed Description of Embodiments

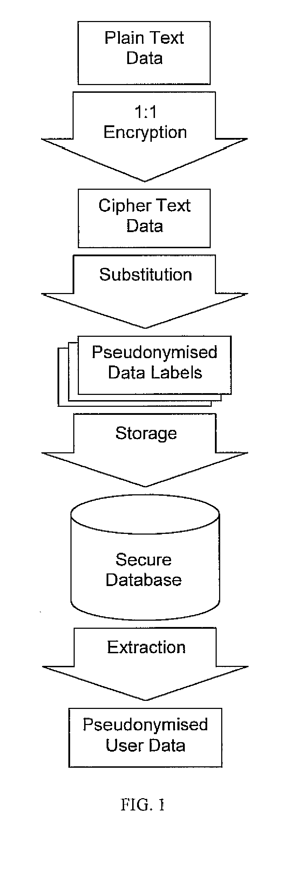

Figure 1 shaws a data storage method according to the prior art. Such a method may be use to store data in pseudonymised form in a database and extract the data from the database for distribution to a variety of users with a variety of levels of access. The method represents the steps that may be carried out by one or more data processing devices, such as computers, to process plain text data records. The data records may be, for example, patient records in a medical database. In order to preserve patient confidentiality, the content of fields that contain identifiable data are pseudonymised by replacing the data with arbitrary labels that have no identifiable connection with the real data.

According to the method shown in Figure 1, the plain text data of the fields to be pseudonymised is encrypted by a one-to-one encryption algorithm to generate cipher text data. A suitable encryption algorithm is Triple-DES encryption using a three part 192-bit key. The encryption algorithm is reversible so that the original plain text data can be recovered from the cipher text data by reversing the algorithm to decrypt the cipher text data.

Each item of encrypted cipher text data is then substituted for a randomly-generated label using a look-up table. The look-up table stores each possible cipher text value with a set of corresponding labels. One label is provided for each expected user of the data. Because the labels are randomly generated, there is no derivable relationship between the labels associated with different users for the same item of cipher text data. This means that two users cannot collude to associate their two sets of data, because there is no deterministic relationship between the values of the substituted fields.

For each item of cipher text data the associated labels in the look-up table are identified. If the particular value of the item of cipher text data has not yet been encountered, a set of associated labels are generated and stored in the look-up table against the cipher text data value.

The result of the substitution step is a set of pseudonymised data labels corresponding in number to the maximum number of expected users of the data. The pseudonymised labels are stored with the remaining, non-pseudonymised, plain text data in a secure database.

When a user requests data from the database, the requested stored plain text data is extracted together with the pseudonymised data labels for that user.

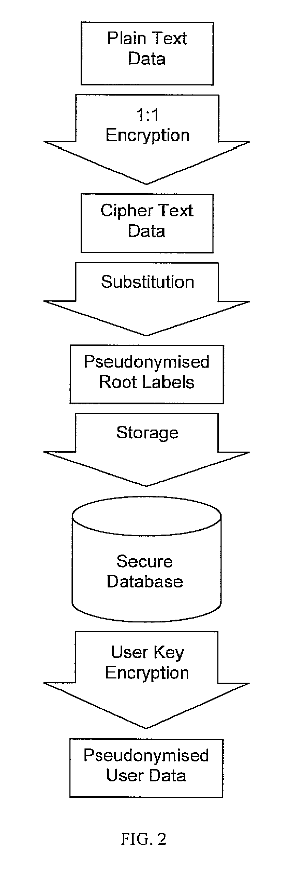

In the method of Figure 1 the secure database represents a potential risk to the security of the data in that it provides a single source for all of the pseudonymised data labels for all users and does not scale to thousands of users. These issues are addressed by the method of Figure 2.

The method illustrated in Figure 2 uses the same encryption step as the known method of Figure 1. However, according to the invention, at the substitution stage only a single set of "root" pseudonymised data labels are extracted from the look-up table for storage in the secure database. In this way, the size of the look-up table is reduced significantly, because it is unnecessary to store a different data label for each possible user. Furthermore, the size of the database is significantly reduced for the same reason.

According to the method of Figure 2, when a user requests data from the database, the requested stored plain text data is extracted as in the method of Figure 1. However, the user-specific data labels for the pseudonymised data are generated by encrypting the root pseudonymised data labels using a user-specific key. In this way, each user receives a consistent set of pseudonymised data labels from the database together with the relevant stored plain text data, without any single source for all the data labels for all users and without limiting the scalability for thousands of users.

In summary, a method of securely storing and retrieving data in a database comprises the steps of consistently substituting the value of at least a first field in a first data set with a corresponding arbitrary data label and storing the first data set, including the substituted data label, in a database. Data is extracted from the database by encrypting the substituted data label in the extracted data using a user-specific key, and communicating the extracted data, including the encrypted substituted data label, to a user associated with the user-specific key. In this way each user receives their own set of substituted data labels, which excludes the possibility of collusion between users.

In one variant of the invention, data processing apparatus can accept plain text and provide pseudonymised root labels on demand as a network service. The same or a complementary data processing apparatus can subsequently accept the root labels and a user encryption key to provide the final pseudonymised user data. Database storage of the root data labels may be carried out by separate, possibly remote, data processing apparatus. This arrangement also uses the concept of generating a root label which is then later combined with a user encryption key to generate the pseudonymised user data.

## Claims

1. A method of securely storing and retrieving data, the method comprising:
consistently substituting the values of at least a first field in a first data set with corresponding arbitrary substituted data labels to generate a second data set;
encrypting the substituted data labels in the second data set using a user-specific key to generate a third data set in which the substituted data labels are replaced by encrypted user data labels; and
communicating the third data set to a user associated with the user-specific key.

2. A method as claimed in claim 1, further comprising the steps of:
storing the second data set in a database; and
extracting the second data set from the database prior to the step of encrypting the substituted data labels in response to a request for a third data set.

3. A method as claimed in claim 1 or 2, wherein the value of the first field in the first data set is an encrypted value.

4. A method as claimed in any preceding claim, wherein the substituted data labels are randomly generated and stored in a look-up table of values of the first field against the corresponding substituted data labels.

5. Data processing apparatus configured to operate in accordance with the method of any preceding claim.

6. Computer software which configures general-purpose data processing apparatus to operate according to the method of any of claims 1 to 4.
